# FASCICULE DE BREVET EUROPEEN

(11) **EP 0 903 592 B1**
(45) Date de publication et mention de la délivrance du brevet: **26.11.2003**
(21) Numéro de dépôt: 98402299.6
(22) Date de dépôt: 17.09.1998
(51) Int. Cl.: G01V 11/00

(54) **Méthode statistique de classement d'événements liés aux propriétés physiques d'un milieu complexe tel que le sous-sol**
Statistisches Verfahren zur Klassifizierung von Ereignissen, die physikalischen Eigenschaften eines komplexen Mediums wie der Untergrund entsprechen
Statistical method for classifying events related to physical properties in a complex medium such as the subsurface

(30) Priorité: 22.09.1997 FR 9712182
(43) Date de publication de la demande: 24.03.1999
(73) Titulaire: Institut Français du Pétrole, 92852 Rueil-Malmaison Cedex (FR)
(72) Inventeur: Fournier, Frédérique, 95240 Cormeilles en Parisis (FR)

(56) Documents cités:
- US-A- 4 926 394
- US-A- 4 937 747
- US-A- 5 012 675
- US-A- 5 638 269
- FOURNIER FREDERIQUE ET AL: "Statistical methodology for deriving reservoir properties from seismic data" GEOPHYSICS;GEOPHYSICS SEPT-OCT 1995 SOC OF EXPLORATION GEOPHYSICISTS, TULSA, OK, USA, vol. 60, no. 5, septembre 1995, pages 1437-1450, XP002070858

## Description

La présente invention concerne d'une manière générale une méthode statistique de classement d'événements variés définis par des attributs, qui sont liés aux propriétés physiques d'un milieu complexe tel que le sous-sol. Il peut s'agir par exemple d'événements d'ordre géologique, géophysique, de données concernant la production de fluides etc.

La méthode selon l'invention trouve des applications en particulier dans le domaine de l'exploration de gisements pétrolifères.

### État de la technique

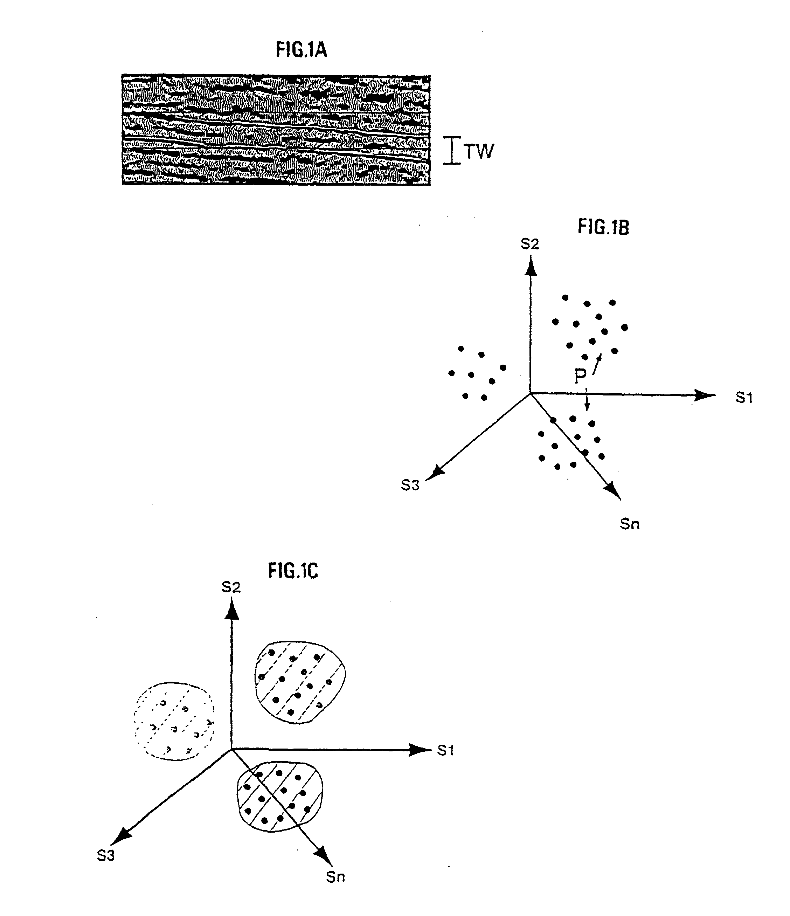

L'interprétation des mesures dans le domaine des géosciences (géologie, géophysique ou l'étude des gisements) requiert le traitement d'un grand nombre de données, souvent caractérisées par beaucoup de paramètres. Des méthodes statistiques multivariables sont alors employées pour résoudre différents problèmes de caractérisation et d'interprétation des mesures. En particulier, un problème fréquemment rencontré est la définition d'une typologie d'objets géologiques ou géophysiques, à partir de mesures indirectes effectuées dessus. On peut citer comme exemples la caractérisation du faciès sismique sur des portions de trace au niveau du réservoir à partir d'attributs sismiques, ou la définition d'électrofaciès à partir des mesures diagraphiques.
a) Faciès sismiques: Les paramètres ou attributs qui les caractérisent sont extraits par exemple des enregistrements sismiques. Le vecteur d'attributs ainsi défini permet de représenter les traces comme des points dans l'espace des différents attributs, qu'il engendre. Dans cet espace, les coordonnées de chaque trace sont données par les valeurs que les attributs prennent sur cette trace (voir Fig.1). Pour regrouper les traces, en fonction de leur proximité dans l'espace des attributs, on applique des techniques statistiques connues de reconnaissance des formes, comme décrit par exemple par :
   - Dumay, J., Fournier, F., 1988, "Multivariate Statistical Analyses applied to Seismic Facies recognition", Geophysics, 53, N°9, pp. 1151-1159.

Chaque groupe exprime un faciès sismique, c'est-à-dire un ensemble de traces similaires du point de vue du caractère sismique au sens des attributs considérés. L'interprétation des faciès sismiques conduit à caractériser les variations géologiques du réservoir entre les puits ou à identifier des zones où la sismique présente des artefacts d'acquisition, de traitement, etc. Cette interprétation se fait a posteriori par analyse des correspondances avec les informations géologiques disponibles (puits, modèle de réservoir, etc.) lorsque les techniques statistiques mises en oeuvre sont des outils de classification (reconnaissance des formes non supervisée). Par contre, une interprétation géologique est incorporée dans la détermination des faciès via une information a priori, avec des outils d'analyse discriminante (reconnaissance des formes supervisée). Les deux approches supervisée et non supervisée, sont tout à fait complémentaires, comme le montre par exemple :
- Déquirez, P.Y., et al, 1995, "Integrated Stratigraphic and Lithological Interprétation of the Esat-Senlac Heavy Oil Pool", 65^{th} Ann. Intern. Mtg. Soc. Expl. Geophys., pp 104-107.
b) Electrofaciès: Ils correspondent à un ensemble de points (cotes profondeurs, issues de différents puits, sur un intervalle d'étude choisi) présentant des caractéristiques homogènes pour une sélection de mesures diagraphiques. Les électrofaciès ont la plupart du temps une signification géologique (lithologie particulière, propriétés pétrophysiques, contenu fluide, etc.). Comme pour l'analyse du faciès sismique, des méthodes statistiques de reconnaissance des formes (supervisées et non supervisées) sont appliquées pour définir automatiquement, sur chaque puits d'un champ, une colonne d'électrofaciès.

Quel que soit le domaine d'application, le recours à des techniques statistiques de reconnaissance des formes permet, en plus du classement d'un objet dans une famille, d'évaluer la probabilité de bonne classification. En fait, c'est un vecteur de probabilités qui est estimé, donnant la probabilité d'attribution dans les différentes classes, l'objet étant alors affecté à la classe de probabilité maximale. Cette caractérisation de l'incertitude associée à la prédiction de la classe d'appartenance, est particulièrement intéressante pour quantifier le risque.

Une difficulté majeure en reconnaissance des formes statistiques est la détermination du nombre correct de classes "naturelles" sous-jacentes à la population. Cette difficulté est particulièrement problématique dans les géosciences, où l'interprétation géologique, au sens large, consiste à comparer un certain modèle du sous-sol, que l'on peut avoir a priori, avec les mesures indirectes enregistrées au niveau du réservoir. Il est donc très important de pouvoir caractériser la structure naturelle des mesures disponibles. Les méthodes de classement appliquées dans le domaine des géosciences, ne permettent pas de résoudre ce problème. Avec apprentissage, le nombre de classes est imposé par l'information a priori prise en compte qui peut donc biaiser les résultats. Sans apprentissage, ce sont la plupart du temps des méthodes de partitionnement qui sont employées, le nombre de classes étant fixé par l'utilisateur. Il est donc très difficile de sélectionner ce paramètre de façon optimale i.e. de l'adapter à la structure de la population. Classiquement, plusieurs essais sont effectués avec différents nombres de classes et des critères de séparabilité des classes sont calculés pour retenir le meilleur essai, mais les critères ne sont performants que sous réserve d'hypothèses fortes sur les données (par exemple, que les classes sont gaussiennes, etc.). La technique en cause ici est décrite par exemple par :
- Milligan et al., 1985, "An Examination of Procedures for Determining the Number of Clusters in a Data Set", Psychometrika, 50, 159-179.

### La méthode selon l'invention

La méthode selon l'invention a pour but de détecter les classes potentielles dans une population d'événements liés aux propriétés physiques d'un milieu complexe tel que le sous-sol, tout en permettant, éventuellement, d'introduire un a priori interprétatif pour valider ou infirmer certaines de ces classes.

Les classes potentielles sont détectées dans une population d'événements repérés à partir de données obtenues par exploration du sous-sol ou par des mesures in situ, (événements d'ordre géologique, géophysique, événements liés à des données de production de fluides etc.) ces événements étant repérés par des points dans un espace multivariable et définis par un vecteur d'attributs, les coordonnées de ces points étant des attributs associés à ces événements.

La méthode est caractérisée en ce qu'elle comporte les étapes suivantes:
a) on estime la loi de probabilité multivariable que suit le vecteur d'attributs sur toute la population d'événements analysée,
b) on sélectionne par analyse et interprétation, différents modes correspondant à des zones de forte densité de la densité de la fonction exprimant la dite loi, le nombre de ces modes traduisant le nombre de classes potentielles dans la population d'événements et, pour chaque mode, un certain nombre de points figuratifs des dits événements, les plus représentatifs de chaque classe; et
c) on détermine une fonction de classement à partir de ces points figuratifs et l'on utilise cette fonction de classement, pour déterminer la probabilité d'appartenance des autres points aux différentes classes potentielles.

Les attributs des événements sont par exemple de type géologique ou géophysique (des attributs sismiques par exemple) ou bien sont liés à des mesures opérées durant la production de fluides issus du milieu, ou bien sont définis encore par des mesures diagraphiques dans un ou plusieurs puits au travers du milieu, etc.

Pour sélectionner les différents modes correspondant à des zones de forte densité, on projette par exemple la fonction de densité de probabilité sur au moins un axe ("déroulé" de la fonction) exprimant un cheminement dans les événements dépendant de la fonction de densité, et l'on sélectionne des modes correspondant à des pics significatifs de la fonction de densité.

Avec la méthode selon l'invention, aucune hypothèse probabiliste n'est faite sur les lois que suivent les attributs: la forme des classes trouvées peut donc être quelconque.

D'autres caractéristiques et avantages de la méthode selon l'invention, apparaîtront à la lecture de la description ci-après d'exemples non limitatifs de mise en oeuvre, en se référant aux dessins annexés où :
- les Fig.1a à 1c illustrent le positionnement des points représentatifs d'objets dans l'espace multivariable de leurs attributs et leurs projections dans des sous-espaces;
- la Fig.2 montre le "déroulé" des modes de la fonction de densité, estimée dans un espace de dimension 3 engendré à partir de mesures réalisées par plusieurs outils de diagraphie;.
- la Fig.3 illustre l'étape d'interprétation interactive à l'aide de diagrammes, par exemple, d'un diagramme RHOB - NPHI, (masse spécifique d vs porosité pr) permettant de former des classes d'appartenance et de sélectionner dans un premier temps les points les plus représentatifs de ces classes;
- la Fig.4 illustre l'étape ultérieure où l'on a réparti tous les autres points dans les classes ainsi formées, et on les a représentés dans le même type de diagramme, avec les symboles graphiques suivants d'appartenance aux classes: Δ (noir) ⇔ Z1, + ⇔ Z2, Δ ⇔ Z3, ⇔ Z4 et * ⇔ Z5.
- les Fig.5a à 5e montrent en plus des diagraphies mesurées dans le puits par les différents outils de mesure (Fig.5b à 5d), qui ont servi à la détermination des électrofaciès, une représentation des résultats du classement sous la forme de pseudo-colonnes lithologiques au niveau des puits (Fig.5a), la probabilité étant représentée comme une diagraphie supplémentaire quantifiant l'incertitude de la prédiction lithologique (Fig.5e);
- les Fig. 6a, 6b, 6c illustrent un exemple d'interprétation des échantillons sismiques en lithologies probables;
- les Fig.7a, 7b représentent respectivement, une section sismique avant inversion et les coefficients de réflexion après inversion de la même section sismique;
- la Fig.8a montre un exemple d'interprétation de portions de traces en classes reliées à différentes qualités de réservoirs associées respectivement à différentes nuances de gris g1 à g4, g1, qui est le gris le plus foncé, représentant la plus mauvaise qualité, g2, le gris sombre quadrillé, une qualité moyenne, g3, le gris sombre uni, une bonne qualité et g4, le gris clair, en fin, une excellente qualité; et
- la Fig.8b montre les allures typiques ("portraits robots ") des différentes classes ou faciès.

### 3 Description plus détaillée de la méthode

Les objets à classer sont représentés dans l'espace multivariable des attributs ― ou paramètres ― utilisés pour les caractériser. La méthodologie de détection des classes comporte trois étapes principales.

La première étape consiste à estimer la loi de probabilité multivariable que suit le vecteur d'attributs. Des techniques non paramétriques d'estimation de la densité de population sont mises en oeuvre, telles les méthodes de type noyau, ou les méthodes de type "plus proches voisins", comme décrit par :
- Silverman, 1986, "Density Estimation for Statistics and Data Analysis", Chapman et Hall,

La deuxième étape est une étape d'analyse et d'interprétation des modes ― ou zones de forte densité ― détectées sur cette loi de probabilité. Le nombre de modes présents sur la fonction de densité, traduit le nombre de classes potentielles dans la population étudiée. Cette étape implique la cartographie ("mapping") de la densité de probabilité multivariable sur un axe ("déroulé" de la densité de probabilité). C'est à ce stade qu'une analyse interprétative des modes est possible.

Les individus constituant un mode par exemple, sont identifiés dans des diagrammes faisant intervenir des attributs significatifs du point de vue de l'interprétation, pour confirmer l'intérêt de garder ce mode comme noyau de base à une classe. Au contraire, un mode peut ne pas être retenu dans l'étape suivante, s'il n'apparaît que comme une fluctuation statistique, sans intérêt pour l'interprétation. Pour chaque mode, un seuil est retenu sur la fonction de densité ce qui permet de sélectionner les points les plus représentatifs de ce mode, ou de la future classe associée, généralement ceux dans la zone la plus dense.

La troisième étape consiste à utiliser les points les plus typiques des modes retenus comme individus d'apprentissage pour des techniques d'analyse discriminante. Diverses méthodes de discrimination peuvent être utilisées (linéaire, quadratique, non paramétrique etc.) qui aboutissent à l'élaboration d'une fonction de classement pour l'attribution d'une classe aux individus ne participant pas aux modes (individus dans les zones de faible densité de l'espace des attributs). A partir de cette fonction, les probabilités d'appartenance aux différents modes sont calculées, ce qui permet alors d'attribuer les individus restants.

Les diverses étapes de la méthode sont clairement illustrées sur les figures.

Le positionnement des points dans un espace multi-variables est illustré aux Fig.1a à 1c. Les objets que l'on peut considérer, sont (Fig.1a) des portions de traces sismiques ou des pixels d'une section sismique correspondant à des échantillons de trace à différents pas de temps successifs dans une fenêtre de temps analysée TW ou encore les cotes de profondeur aux puits, s'il s'agit d'électrofaciès, etc.

Ils sont représentés comme des points P dans l'espace multidimensionnel engendré par les différents paramètres ou attributs S1, S2, S3, Sn (Fig.1b) qui les caractérisent. Ces paramètres sont par exemple, les attributs sismiques (amplitudes, phases, fréquences instantanées, etc.), pour le cas de la détermination des faciès sismiques, ou encore les mesures diagraphiques disponibles relevées le long des puits au travers du réservoir, dans le cas de la détermination des électrofaciès. Dans l'espace S1 à Sn des paramètres, au moyen des techniques déjà évoquées de reconnaissance des formes, on va former des classes de points, chaque classe traduisant un faciès sismique ou un électrofaciès (Fig.1c) dans les exemples illustratifs choisis.

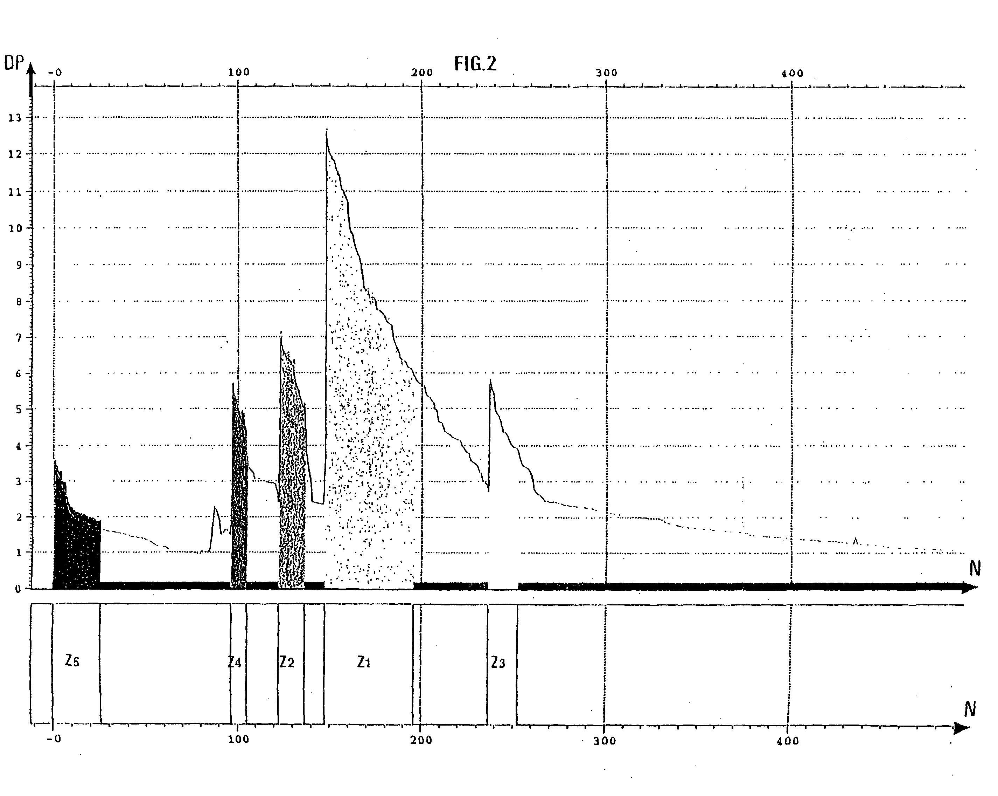

Une application de la méthode selon l'invention à la détermination automatique des électrofaciès, à partir de logs diagraphiques obtenus dans des puits forés au travers du réservoir, est illustrée par les Fig.2-5. Ces logs ont été obtenus au moyen des quatre outils de mesure suivants: une sonde de densité, une sonde de type sonique, une sonde à neutrons mesurant la porosité et une sonde à rayons gamma. A chaque cote de profondeur, avec un pas d'échantillonnage entre cotes successives d'un demi-pied par exemple, les objets à classer sont représentés comme des points dans un espace à quatre dimensions dont les coordonnées sont respectivement les mesures fournies par les quatre sondes.

La première étape de la méthode consiste à estimer la fonction de densité de probabilité. Cette fonction est alors projetée sur un axe particulier, comme le montre la Fig.2, en portant en ordonnée la valeur DP de la densité de probabilité et en abscisse, le numéro N de l'objet à classer dans la séquence de projection qui a été choisie, opération que l'on désigne par "déroulé". Les différents pics sur ce "déroulé" de la densité de probabilité, correspondent aux zones de forte densité, chaque zone Z1 à Z6 matérialisant une classe et les points qui se trouvent dans ces zones de forte densité, par conséquent, les objets les plus typiques de ces classes.

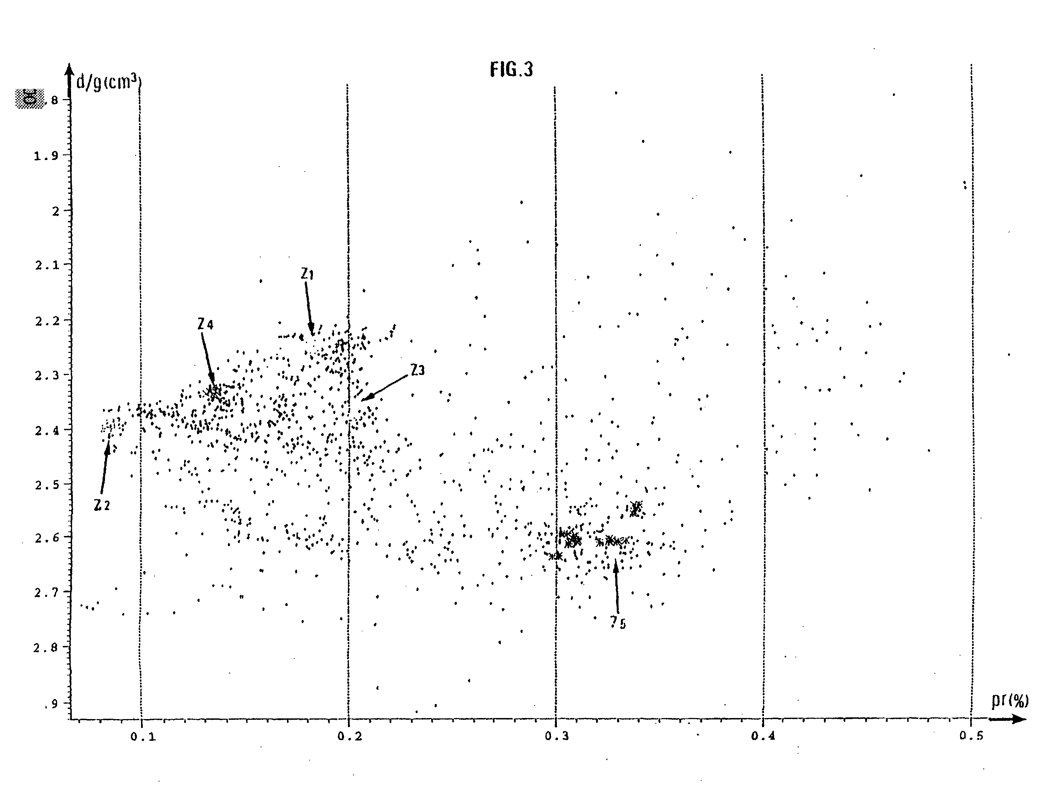

Il s'agit ensuite de dégager la signification lithologique des classes ainsi formées. Pour ce faire, on procède à une analyse comparative avec les différentes représentations que l'on peut obtenir en projetant les points dans un sous-espace 2D. Sur la projection de la Fig.3 par exemple, qui est un diagramme (densité **d** vs porosité **pr**), la configuration des points correspond à une interprétation lithologique particulière. On l'utilise pour confirmer la signification lithologique des classes de points que l'on a repérées. Les points de la zone Z5 sur le "déroulé" de la Fig.2, correspondent à des points positionnés dans la zone Z5 sur la Fig.3, points qui, compte-tenu de la plage de valeurs de densité **d** et de porosité **pr**, correspondent plutôt à des grès argileux.

Par des analyses comparées identiques pour les points des zones Z3, Z4, Z1 de la Fig.2 et de la position correspondante de ces zones sur la Fig.3, on estime que ces points correspondent à des grès propres de plus en plus poreux, quand on se déplace de la zone Z3 vers la zone Z1. La classe Z4 correspond plutôt à des grès cimentés.

Le "déroulé" ou projection de la fonction de densité de probabilité et son analyse permettent donc de dégager à la fois :
- le nombre de classes dans la population d'objets étudiée: il y a autant de classes que de pics sur la fonction de densité de probabilité (Fig.2);
- les représentants les plus typiques de chaque classe, les points centraux des pics de densité, que l'on peut doter d'un marquage d'identification tel qu'un codage par des couleurs différentes ou par une variété de grisés différents comme sur les Fig. 2 et 3.

L'étape n° 3 consiste à utiliser ces points typiques, représentant les "noyaux" des faciès, pour construire une fonction de classement qui permette le tri (l'apparentement) des points non encore classés (en noir, sur la Fig.3). On construit cette fonction par une technique connue d'analyse discriminante.

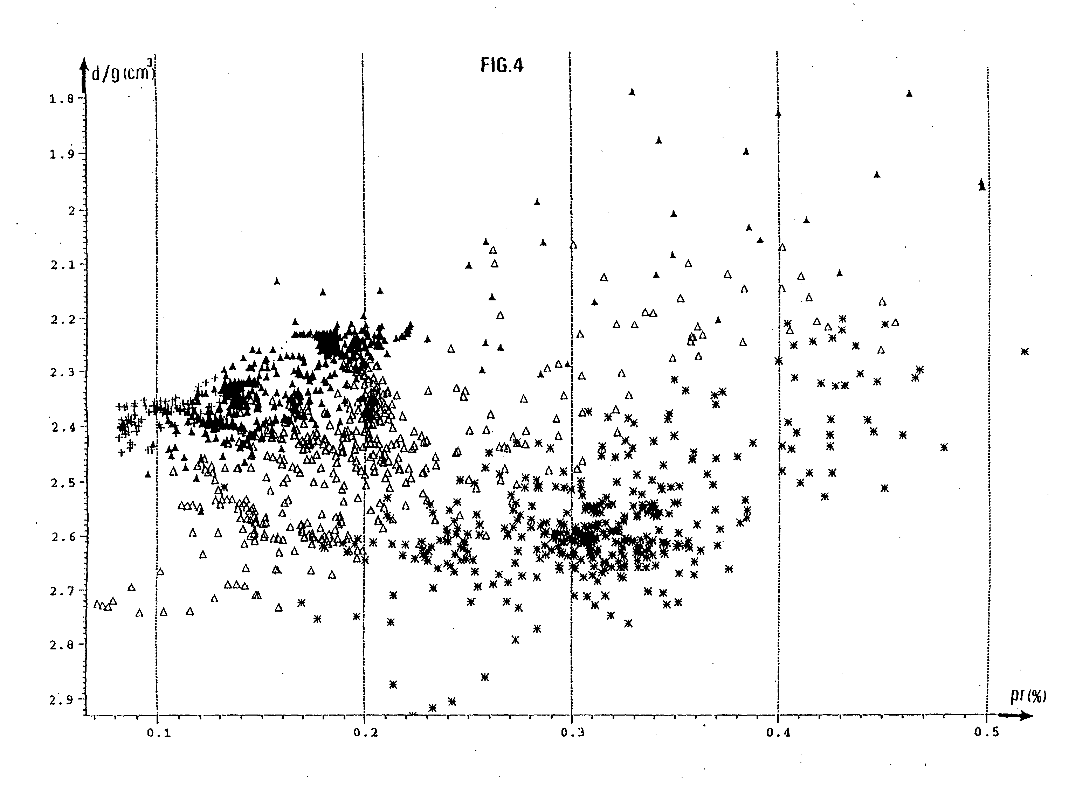

A l'issue de cette étape, tous les points se trouvent regroupés sélectivement dans les différentes classes détectées sur la projection de la densité de probabilité (Fig.2), et on peut donc leur attribuer à chacun le marquage d'identification de leur classe d'appartenance défini plus haut dans la présentation des figures. On obtient un diagramme densité vs porosité analogue à celui de la Fig.4.

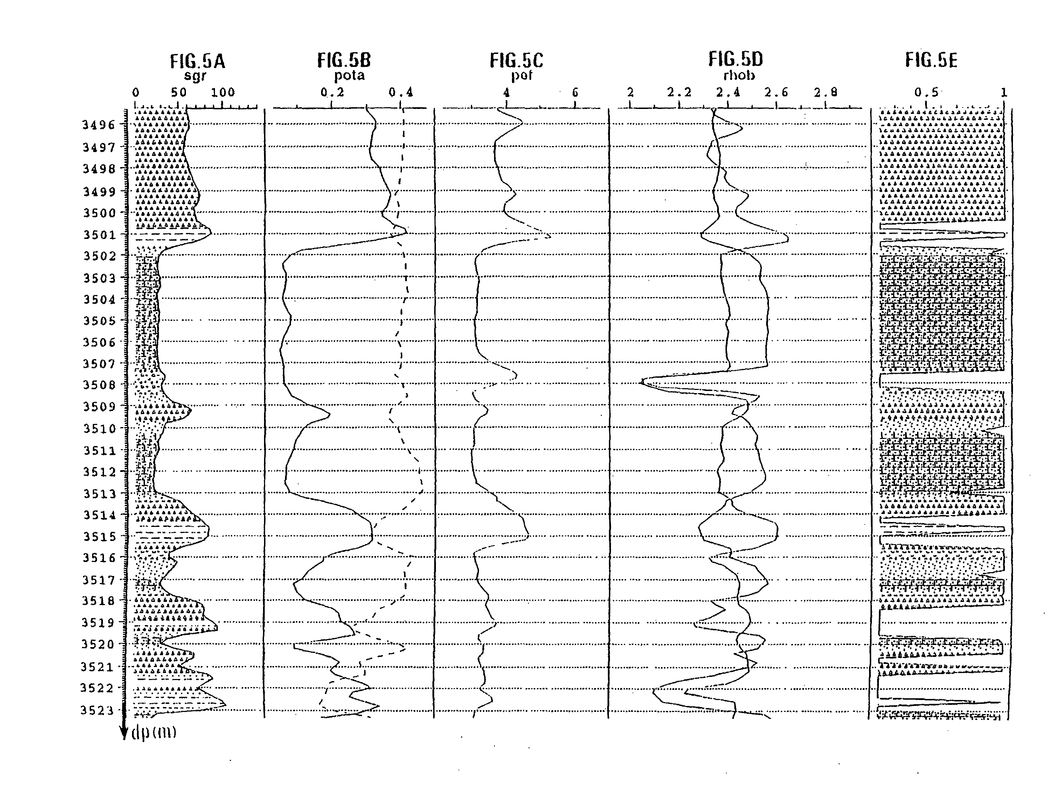

On peut ainsi compléter les logs de diagraphies que l'on a obtenus au moyen des différents outils de mesure (Fig.5b à 5d) par une colonne de "pseudo-lithologies" (Fig.5a) représentant en fonction de la profondeur **dp**, les différents modes (points typiques) et la classe finale des objets des modes, ainsi que la probabilité **pb** de bon classement associée (Fig.5e).

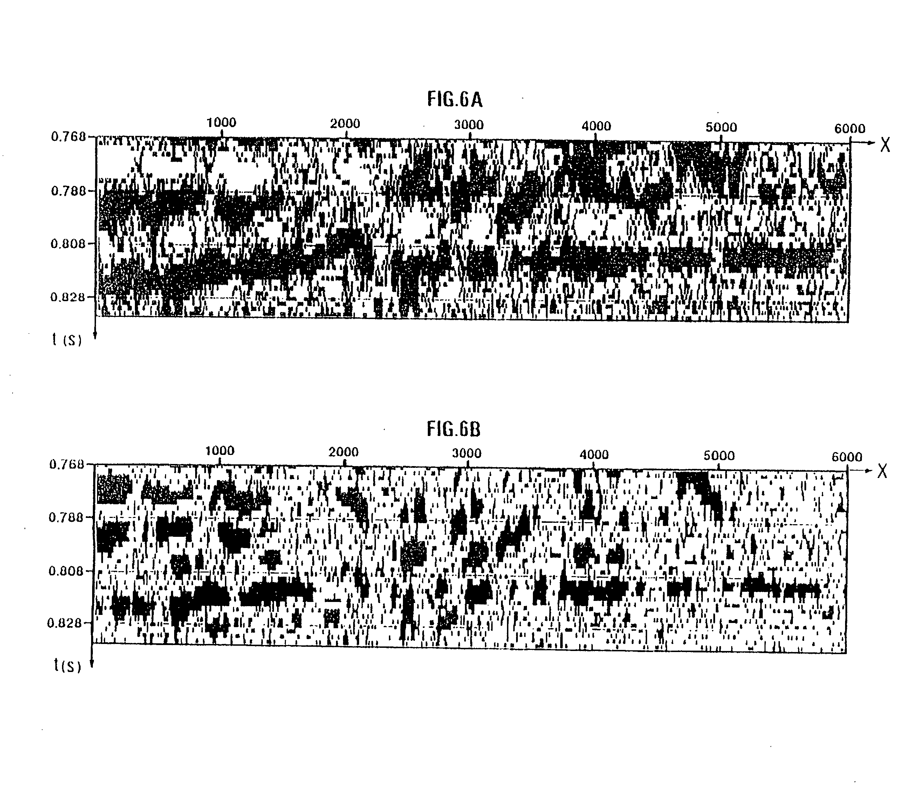

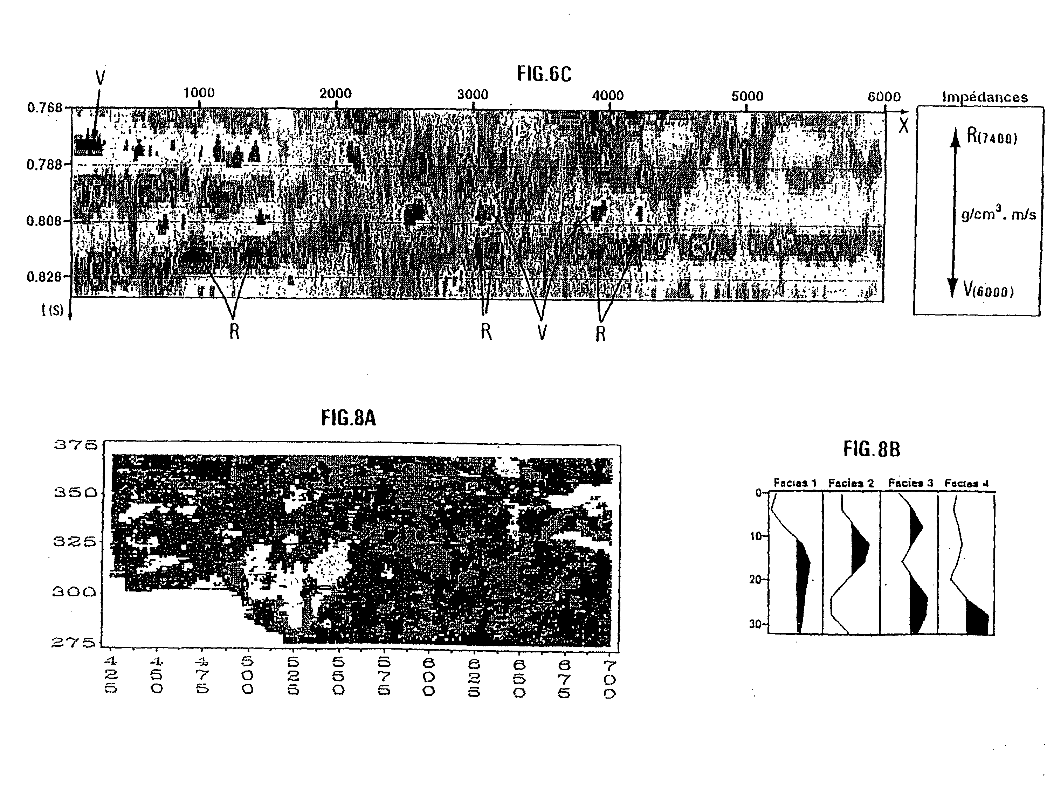

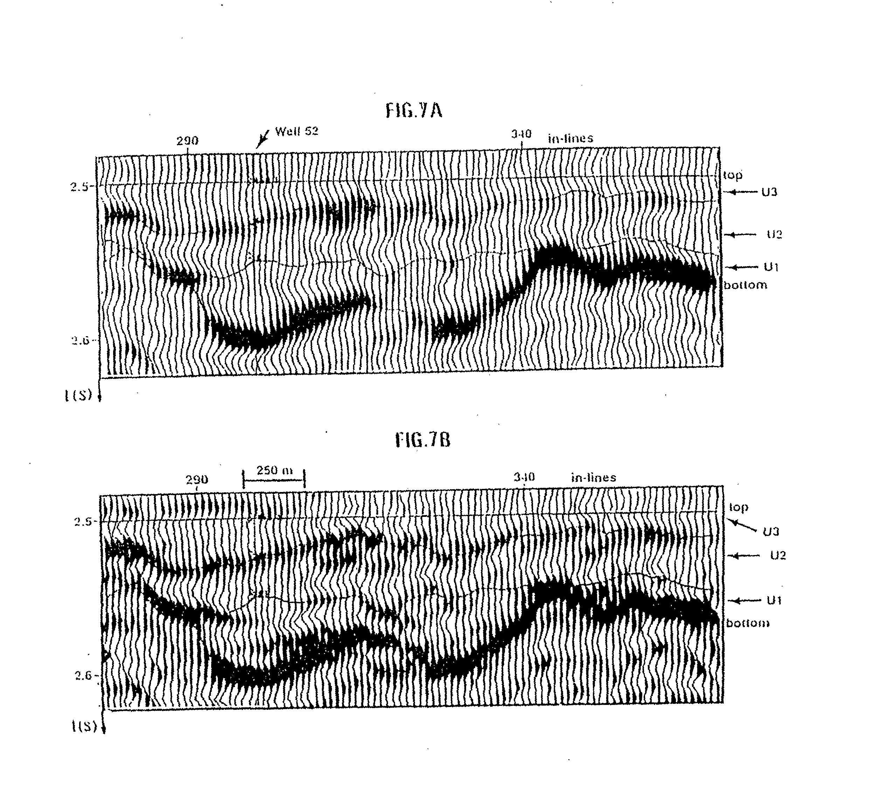

Les figures 6 à 8 concernent des applications de la méthodologie décrite à des objets de nature sismique qu'il s'agisse de pixels d'une image ou d'un cube sismique, (Fig.6a, 6b, 6c), soit des portions de traces définies entre deux marqueurs.

On étudie une section en impédance acoustique (Fig.6c) issues de l'inversion stratigraphique des amplitudes après sommation en utilisant la méthode décrite dans le brevet EP 0 354 112 du demandeur. On classifie chaque pixel de la section et donc chaque échantillon en temps. Ici, on travaille dans un espace unidimensionnel car le seul attribut sismique employé pour caractériser les pixels, est l'impédance acoustique. La même procédure que celle détaillée précédemment, conduit à la détection de deux classes codées respectivement V (gris sombre) et R (gris clair) sur la section de la Figure 6a, V correspondant à de la plaine littorale et V, à des matériaux de remplissage de chenaux.

Sur la Fig.6b, un seuil a été imposé sur la probabilité de bon classement, pour ne représenter que les pixels sismiques les plus sûrement classifiés. La comparaison des sections des Fig.6a, 6b avec la coupe lithologique du réservoir (Fig.6c) montre que la classe R correspond plutôt à des faciès gréseux et la classe V, à des faciès argileux.

Sur les Fig.7a, 7b, les objets que l'on classe sont maintenant des portions de traces définies entre les marqueurs "Top" et U₃/U₂ de l'image sismique, sur un cube de sismique après sommation. Les paramètres caractérisant ces portions de traces, sont les coefficients d'une décomposition polynomiale à l'ordre 6 de la succession des amplitudes sismiques de la fenêtre temporelle entre Top et U₃/U₂. Les portions de traces sont donc représentées dans un espace de dimension 6.

Toujours avec la même procédure, on a formé (Fig.8b), quatre classes de portions de traces (faciès 1 ..., faciès 4) correspondant à des morphologies ou caractères sismiques bien différents. Pour chaque classe, on a fait la moyenne des amplitudes des traces constituant la classe, ce qui donne une sorte de "portrait robot" de chaque classe. Une classe étant attribuée à chaque portion de trace, on peut représenter le résultat sur la sismique 3D sous forme de carte de faciès.

L'interprétation a posteriori de cette carte par rapport aux données géologiques disponibles au niveau des puits, conduit à penser que les différents faciès doivent correspondre
- à un réservoir de qualité médiocre avec des marnes abondantes (faciès 1),
- à un réservoir de qualité moyenne, avec turbidites fines (alternances sables/argiles) (faciès 2),
- à un réservoir de bonne qualité à dominante de grès (faciès 3), et
- à un réservoir d'excellente qualité constitué presque exclusivement de grès très poreux (faciès 4).
- On a décrit une application de la méthode selon l'invention au classement d'événements liés aux propriétés et à la structure du sous-sol, dans le but notamment de faciliter l'étude de gisements. On ne sortirait pas du cadre de l'invention toutefois en appliquant la méthode à l'étude d'images d'un milieu complexe quelconque tel que par exemple le corps humain.

## Revendications

1. Méthode statistique de classement d'une population d'événements liés aux propriétés physiques d'un milieu complexe tel que le sous-sol, détectés par une exploration du milieu ou par des mesures in situ, pour détecter des classes potentielles existant dans la dite population, ces événements étant repérés par des points (P) dans un espace multivariable (S1-Sn) et définis par un vecteur d'attributs, les coordonnées de ces points étant des attributs associés à ces événements, dans laquelle on estime une loi de probabilité multivariable applicable à la dite population, **caractérisée en ce qu'**elle comporte les étapes suivantes :
a) on estime la loi de probabilité multivariable que suit le vecteur d'attributs sur toute la population d'événements analysée ;
b) on sélectionne par analyse et interprétation, différents modes correspondant à des zones (Z1-Z5) de forte densité de la fonction de densité exprimant la dite loi de probabilité, le nombre de ces modes traduisant le nombre de classes potentielles dans la population d'événements et, pour chaque mode, un certain nombre de points figuratifs des dits événements, les plus représentatifs de chaque classe ; et
c) on détermine une fonction de classement à partir de ces points figuratifs et l'on utilise cette fonction de classement, pour déterminer la probabilité d'appartenance des autres points aux différentes classes potentielles.

2. Méthode selon la revendication 1, **caractérisée en ce que** les dits événements sont de type géologique ou géophysique.

3. Méthode selon l'une des revendications précédentes, **caractérisée en ce que** les dits événements sont liés à la production de fluides issus du dit milieu.

4. Méthode selon l'une des revendications précédentes, **caractérisée en ce que** les dits attributs sont définis par des mesures diagraphiques dans un ou plusieurs puits au travers du milieu.

5. Méthode selon l'une des revendications précédentes, **caractérisée en ce que** les dits attributs sont des attributs sismiques.

6. Méthode selon l'une des revendications précédentes, **caractérisée en ce que** les dits attributs sont définis par des mesures de production.

7. Méthode selon l'une des revendications précédentes, **caractérisée en ce que** l'on sélectionne les différents modes correspondant à des zones (Z1-Z5) de forte densité, en projetant la fonction de densité de probabilité sur un axe exprimant un cheminement dans les événements dépendant de la fonction de densité, et l'on sélectionne des modes correspondant à des pics significatifs de la fonction de densité.

## Patentansprüche

1. Statistisches Verfahren zur Klassierung einer Grundgesamtheit von mit physikalischen Eigenschaften eines komplexen Mediums wie dem Untergrund verknüpften Ereignissen, welche durch eine Exploration des Mediums oder durch in-situ Messungen detektiert werden, um potentielle, in dieser Grundgesamtheit existierende Klassen zu detektieren, wobei diese Ereignisse durch Punkte (P) in einem multivariablen Raum (S1-Sn) markiert und durch einen Merkmalevektor definiert sind, wobei die Koordinaten dieser Punkte diesen Ereignissen zugeordnete Merkmale sind, bei dem man eine auf diese Grundgesamtheit anwendbare multivariable Wahrscheinlichkeitsverteilung schätzt, **dadurch gekennzeichnet, dass** es die folgenden Schritte umfasst:
a. man schätzt die multivariable Wahrscheinlichkeitsverteilung, an welche der Merkmalevektor sich über die ganze analysierte Grundgesamtheit von Ereignissen hält;
b. man wählt durch Analyse und Interpretation unterschiedliche Moden entsprechend Zonen (Z1-Z5) hoher Dichte der Dichtefunktion, welche diese Wahrscheinlichkeitsverteilung ausdrückt, wobei die Anzahl dieser Moden die Anzahl potentieller Klassen in der Grundgesamtheit von Ereignissen und für jeden Mode eine gewisse Anzahl figürlicher Punkte dieser Ereignisse, die für jede Klasse am repräsentativsten sind, wiedergibt; und
c. man eine Klassierungsfunktion, ausgehend von diesen figürlichen Punkten, bestimmt und man diese Klassierungsfunktion verwendet, um die Wahrscheinlichkeit der Zugehörigkeit der anderen Punkte zu den unterschiedlichen potentiellen Klassen zu bestimmen.

2. Verfahren nach Anspruch 1, **dadurch gekennzeichnet, dass** diese Ereignisse von geologischer oder geophysikalischer Art sind.

3. Verfahren nach einem der vorhergehenden Ansprüche, **dadurch gekennzeichnet, dass** diese Ereignisse mit der Produktion der aus diesem Medium stammenden Fluide verknüpft sind.

4. Verfahren nach einem der vorhergehenden Ansprüche, **dadurch gekennzeichnet, dass** diese Merkmale durch Diagraphiemessungen in einem oder mehreren das Medium durchsetzenden Bohrlöchern oder Schächten definiert sind.

5. Verfahren nach einem der vorhergehenden Ansprüche, **dadurch gekennzeichnet, dass** diese Merkmale seismische Merkmale sind.

6. Verfahren nach einem der vorhergehenden Ansprüche, **dadurch gekennzeichnet, dass** diese Merkmale durch Produktionsmessungen definiert sind.

7. Verfahren nach einem der vorhergehenden Ansprüche, **dadurch gekennzeichnet, dass** man die verschiedenen Modes entsprechend Zonen (Z1-Z5) hoher Dichte auswählt, indem man die Wahrscheinlichkeitsdichtefunktion auf eine Achse projiziert, die einen von der Dichtefunktion abhängigen Fluss bei den Ereignissen ausdrückt, und man Modes auswählt, welche prägnanten Peaks der Dichtefunktion entsprechen.

## Claims

1. Statistical method for classifying a population of events linked to the physical properties of a complex medium such as the subsurface, detected by exploration of the medium or by in situ measurements, to detect potential classes existing in the said population, these events being referenced by points (P) in a multivariable space (S1-Sn) and defined by an attributes vector, the co-ordinates of these points being attributes associated with these events, in which a multivariable probability law is estimated which is applicable to the said population, ***characterised by** the fact that* it includes the following steps:
a) the multivariable probability law is estimated which the attributes vector follows through the whole analysed population;
b) different modes are selected, by analysis and interpretation, corresponding to high density zones (Z1-Z5) of the density function expressing the said probability law, the number of these modes resulting from the number of potential classes in the event population and, for each mode, a certain number of points are selected representative of the said events, those most representative of each class; and
c) a classification function is determined from these representative points and this classification function is used to determine the probability of the other points belonging to the different potential classes.

2. Method as described in claim 1, ***characterised by** the fact that* the said events are of geological or geophysical type.

3. Method as described in one of the preceding claims, ***characterised by** the fact that* the said events are linked to the production of fluids emanating from the said medium.

4. Method as described in one of the preceding claims, ***characterised by** the fact that* the said attributes are defined by well logging measurements in one or more wells through the medium.

5. Method as described in one of the preceding claims, ***characterised by** the fact that* the said attributes are seismic attributes.

6. Method as described in one of the preceding claims, ***characterised by** the fact that* the said attributes are defined by production measurements.

7. Method as described in one of the preceding claims, ***characterised by** the fact that* the different modes are selected corresponding to zones (Z1 - Z5) of high density, by projecting the probability density function onto an axis expressing an evolution in the events dependent on the density function, and modes are selected corresponding to significant peaks in the density function.
